# EUROPÄISCHE PATENTSCHRIFT

(11) **EP 2 077 200 B1**
(45) Veröffentlichungstag und Bekanntmachung des Hinweises auf die Patenterteilung: **26.09.2012**
(21) Anmeldenummer: 09150053.8
(22) Anmeldetag: 05.01.2009
(51) Int. Cl.: B60J 7/22

(54) **Personenkraftfahrzeug sowie Windschotteinrichtung**
Passenger motor vehicle and wind block device
Véhicule particulier et dispositif pare-vent

(30) Priorität: 04.01.2008 DE 102008000007
(43) Veröffentlichungstag der Anmeldung: 08.07.2009
(73) Patentinhaber: FKT GmbH, 85104 Pförring (DE); Körber, Stefan, 85092 Kösching (DE)
(72) Erfinder: Ortel, Andreas, 92334, Berching (DE); Körber, Stefan, 85092, Kösching (DE)
(74) Vertreter: Schlief, Thomas P.

(56) Entgegenhaltungen:
- EP-A- 0 778 171
- EP-A- 1 862 342
- DE-A1- 10 345 292
- GB-A- 2 307 715
- JP-A- 60 244 620

## Beschreibung

Die vorliegende Erfindung betrifft ein Personenkraftfahrzeug nach dem Oberbegriff des Anspruchs 1. Weiterhin betrifft die Erfindung eine Windschotteinrichtung für ein solches Fahrzeug.

Windschotteinrichtungen sind im Stand der Technik in verschiedenen Ausführungen bekannt. Eine Abdeckung wird hierbei derart an dem Personenkraftfahrzeug montiert, dass durch sie ein Innenraum des Personenkraftfahrzeuges nach außen hin abgedeckt ist. Die Abdeckung befindet sich dann oberhalb der Rücksitze und deckt somit den Raum zwischen den Vordersitzen und den Lehnen der Fahrzeugrücksitze ab. Das Windschott ist schwenkbar an dieser Abdeckung angeordnet und befindet sich in Gebrauchsposition direkt hinter den Lehnen der Vordersitze, um die Insassen auf den Vordersitzen vor unangenehmen Luftströmungen zu schützen sowie die damit einhergehende Geräuschbelästigung zu verringern. Die Abdeckung dient zugleich der Befestigung der Windschotteinrichtung in dem Fahrzeug.

Die DE 10 2004 032 379 A1 beschreibt eine derartige Windschotteinrichtung mit einem Windschott und einer Abdeckung. Die Abdeckung ist im Bereich der Gürtellinie an der Karosserie über Koppelelemente fixierbar. Diese Koppelelemente können beispielsweise ausfahrbare Haltezapfen umfassen, die mit entsprechenden Ausnehmungen im Bereich der Karosserie in Eingriff bringbar sind. Zusätzlich ist die Abdeckung im Bereich der Rücksitzlehne mit hinteren Koppelelementen fixierbar. Hierzu sind an der Abdeckung als Koppelelemente ausgebildete Fixiervorsprünge mit Zapfen angeordnet, die in hintere Aufnahmen am Fahrzeug eintauchen und in diesen verankerbar sind.

Die DE 201 22 172 U1 beschreibt ebenfalls eine Windschotteinrichtung mit einer Abdeckung und einem an dieser klappbar angeordneten Windschott. Zur Montage an dem Personenkraftfahrzeug ist die Abdeckung rückwärtig mit zwei als Koppelelementen ausgebildeten, starr angeordneten Haltestiften versehen. Die vorderen Haltestifte sind in Fahrzeugquerrichtung verschieblich geführt und verriegelbar. Bei der Montage der Windschotteinrichtung werden bei zunächst eingezogenen vorderen Haltestiften die hinteren Haltestifte in ihnen zugeordnete rückwärtige Aufnahmen bzw. Ausnehmungen in x-Richtung (Fahrzeuglängsrichtung) eingeschoben. Diese Aufnahmen sind üblicherweise zwischen einem Rücksitz und einer Seitenverkleidung angeordnet. Anschließend werden die in y-Richtung (Fahrzeugquerrichtung) verschieblichen vorderen Haltestifte entriegelt, ausgefahren und in die jeweils zugeordneten seitlichen Aufnahmen bzw. Ausnehmungen am Personenkraftfahrzeug eingeführt.

Aufgabe der vorliegenden Erfindung ist es, ein Personenkraftfahrzeug zur Befestigung einer Windschotteinrichtung sowie eine zugehörige Windschotteinrichtung zu schaffen, mit welchem der Nutzwert von Fahrzeug und Windschotteinrichtung gesteigert sowie deren Optik verbessert wird.

Diese Aufgabe wird durch die Merkmale der unabhängigen Ansprüche gelöst.

Die Vorteile der Erfindung sind insbesondere darin zu sehen, dass zumindest eine der Aufnahmen nicht permanent in ihrer Gebrauchsstellung zu sein braucht, sondern erst bei Bedarf in dieselbe bewegt werden muss. Somit ist es insbesondere möglich, die Aufnahme bzw. die Aufnahmen in eine für den Betrachter unscheinbare Position zu bringen, in welcher der ästhetische Gesamteindruck des Fahrzeugs erhalten bleibt. Gleichfalls können die Aufnahmen in eine Ruhestellung bewegt werden, in der sie nicht durch nachlässiges Benehmen mit Papier, Kaugummi o.ä. verstopft werden können.

Im Folgenden wird generell in der Mehrzahl von den "Aufnahmen" gesprochen. Die Erfindung lässt sich aber auch mit nur einer erfindungsgemäß ausgestalteten Aufnahme mit mindestens einem Koppelabschnitt realisieren, während die andere Aufnahme bzw. die übrigen Aufnahmen nach einer anderen Lösung, insbesondere solche nach dem Stand der Technik, realisiert werden können. Die folgenden Aussagen gelten demnach sinngemäß auch für nur eine erfindungsgemäße Aufnahme.

Es ist vorteilhaft, wenn die Koppelabschnitte in der Ruheposition von außen nicht sichtbar sind. Zu diesem Zweck bietet es sich an, dass die Koppelabschnitte und vorzugsweise die gesamten Aufnahmen in der Seitenverkleidung des Fahrzeugs versenkbar ausgebildet sind. Vorzugsweise schließt zumindest eine Seite der jeweiligen Aufnahmen mit der Seitenverkleidung des Fahrzeugs ab, wenn die Aufnahmen in ihrer jeweiligen Ruhestellung sind. Auch ist es möglich und vorteilhaft, dass die Aufnahmen zum Fahrgastraum eine Blende, eine Verkleidung, eine Zierleiste oder ähnliches aufweisen, wenn ein entsprechender optischer Eindruck gewünscht ist.

Besonders bevorzugt sind die betreffenden bewegbaren Aufnahmen translatorisch bewegbar ausgebildet, beispielsweise nach Art einer Schublade. In der Ruhestellung können die Aufnahmen derart in die Seitenverkleidung (oder andere Fahrzeugteile) eingeschoben werden, dass sie mit der Verkleidung abschließen und sich somit ein geschlossener optischer Eindruck ergibt. Zudem werden hierdurch freie Kanten, Öffnungen u.ä. vermieden.

Bei der vorgenannten Ausführungsform bietet es sich insbesondere an, dass die Aufnahmen im Wesentlichen senkrecht zur Seitenverkleidung des Fahrzeugs, d.h. in Fahrzeugquerrichtung bzw. y-Richtung, linear bewegbar ausgebildet sind.

Alternativ ist eine Bewegung in x-Richtung, ggf. auch in z-Richtung, möglich. Kombinierte Bewegungsverläufe der Aufnahmen, beispielsweise in x-Richtung plus y-Richtung, können ebenfalls vorteilhafte Ausführungen darstellen.

Alternativ oder auch zusätzlich zu linearen Bewegungen können die Aufnahmen drehbar ausgebildet sein. Zur Montage der Windschotteinrichtung werden die betreffenden bewegbaren Aufnahmen - zumindest auf einem Bewegungsabschnitt - in ihre Gebrauchsstellung rotiert, so dass die Koppelelemente mit ihnen in Eingriff gebracht werden können. Nach Lösen der Koppelelemente zum Verstauen der Windschotteinrichtung schwenken die Aufnahmen automatisch, halbautomatisch oder per Hand in ihre Ruhestellung.

Bei der vorgenannten Ausführungsform bietet es sich insbesondere an, wenn die Drehachsen der betreffenden Aufnahmen im Wesentlichen in x-Richtung oder in z-Richtung des Fahrzeugs verlaufen.

Besonders bevorzugt sind die Aufnahmen nach Befestigung der Windschotteinrichtung in eine Gebrauchsstellung bzw. -position überführbar, in der sich die Windschotteinrichtung nicht ohne weiteres aus den Aufnahmen lösen kann. In diesem Fall würden die Aufnahmen mindestens drei Positionen einnehmen können, nämlich die Ruheposition mit bevorzugt nicht sichtbaren Koppelabschnitten, eine Vorbereitungsposition, in denen vorzugsweise die Koppelelemente eingepasst werden, und eine Gebrauchsposition, in der die Koppelelemente auch bei hohen angreifenden Windkräften sicher in den Aufnahmen gelagert sind. Es ist des Weiteren bevorzugt, die Aufnahmen in der Gebrauchsposition zu fixieren bzw. zu arretieren, so dass sie sich nicht zurück in die Vorbereitungsposition bewegen.

So ist es möglich, dass beispielsweise bei rotierbaren Aufnahmen die Koppelabschnitte, die in vorteilhaften Ausführungsformen als Öffnungen ausgebildet sind, in eine Vorbereitungsstellung schräg nach oben zu verschwenken. Dann können die Koppelelemente, die korrespondierend zu den vorgenannten Öffnungen dann vorteilhafterweise als Stifte bzw. Zapfen ausgebildet sind, bei nur teilweise aufgeklapptem Abdeckungsrahmen schräg nach unten in die Öffnungen eingeführt werden. Beim vollständigen Aufdrücken des Abdeckungsrahmens schwenken die Öffnungen weiter nach unten, bis sich die Öffnungen der gegenüberliegenden Aufnahmen gegenüberliegen.

Die Ausgestaltung der Aufnahmen kann hierbei derart gewählt sein, dass die Aufnahmen durch das Aufspreizen des Abdeckungsrahmens jeweils ein kurzes Stück linear in die jeweilige Seitenverkleidung geschoben werden. Alternativ drehen sich die Aufnahmen ohne Linearbewegung in ihre Gebrauchsstellung, wobei die Koppelelemente am Abdeckungsrahmen lediglich tiefer in die Öffnungen der Aufnahmen gleiten. Andere Einbauarten mit drehbaren Aufnahmen sind ohne weiteres möglich, wie später deutlicher wird.

Auch ist es alternativ oder zusätzlich möglich, dass die Windschotteinrichtung ihrerseits nach Einführen in die Koppelabschnitte bewegt wird, um sie in den Aufnahmen sicherer zu lagern. So kann gemäß einer vorteilhaften Ausführungsform die Windschotteinrichtung in Fahrzeuglängsrichtung (x-Richtung) in eine Gebrauchs- bzw. Endstellung bewegt werden.

Bevorzugt werden die Aufnahmen und ggf. auch die Windschotteinrichtung zumindest in ihrer Gebrauchsstellung zusätzlich fixiert, so dass sich weder die Aufnahmen noch die Windschotteinrichtung aus ihrer jeweiligen Position bewegen können und somit eine größtmögliche Sicherheit gewährleistet ist. Fixiermöglichkeiten für die Aufnahmen sind beispielsweise Verrastungen, Verzahnungen und ähnliches. Die Windschotteinrichtung kann bei Bedarf durch ähnliche Mechanismen in ihrer Position gehalten werden.

Auch kann den Aufnahmen mindestens eine Arretiereinrichtung zugeordnet sein, welche ein Koppelelement der Windschotteinrichtung relativ zu einer Aufnahme arretiert. Die Arretiereinrichtung kann eine Feder umfassen, die beispielsweise in der Aufnahme angeordnet ist oder Teil der Aufnahme ist, beispielsweise als federnde Erhebung ausgebildet.

Es bietet sich mit Vorteil an, dass die Koppelabschnitte als Öffnungen und die Koppelelemente der Windschotteinrichtung als Stifte bzw. Zapfen ausgebildet sind. Hierdurch können die Aufnahmen ohne Vorsprünge o.ä. ausgebildet und damit auch in einfacher Weise beweglich gestaltet sein. Ein Verhaken, Festklemmen, Verbiegen und ähnliche Probleme aus Seiten der Aufnahmen werden hierbei im Fahrzeugbereich verhindert.

Vorteilhafterweise ist zumindest ein Teil der Öffnungen geschlitzt ausgebildet. Der Schlitz kann in Richtung auf die Seitenverkleidung des Fahrzeugs verlaufen. Die Stifte des Abdeckungsrahmens, der sich hierzu noch nicht in ganz aufgeklapptem Zustand befinden muss, können dann von oben in die gegenüber den Schlitzabschnitten verbreiterten Öffnungen eingesetzt werden. Beim vollständigen Aufdrücken des Abdeckungsrahmens gleiten die Stifte in die geschlitzten Abschnitte und können dann nicht mehr nach oben aus den Öffnungen rutschen.

Die Richtung des Schlitzverlaufs einer oder mehrerer Aufnahmen kann auch zum Fahrgastraum (entgegen gesetzte y-Richtung) weisen oder in Fahrzeuglängsrichtung (x-Richtung). Auch sind Kombinationen von verschiedenen Raumrichtungen möglich.

Bei einer Alternative sind die Koppelabschnitte als Zapfen bzw. Stifte und die Koppelelemente als Öffnungen ausgebildet. Auch können andere Koppelarten oder Kombinationen von verschiedenen Koppelarten vorgesehen sein, beispielsweise Rast- oder Hakverbindungen, starke Magnetverbindungen, Schlaufenverbindungen, usw.

Besonders bevorzugt sind mehrere Koppelabschnitte für mehrere Koppelelemente in Fahrzeuglängsrichtung beabstandet in einer Leiste angeordnet, welche in diesem Fall als Aufnahme für die Mehrzahl an Koppelelementen dient. Hierbei ist die gesamte Leiste bewegbar, beispielsweise linear relativ zur Fahrzeugverkleidung. Eine solche Leiste weist den Vorteil auf, dass sie der oft nicht-linearen Kontur des Fahrzeugs, insbesondere der Fahrzeugverkleidung, folgend ausgebildet sein kann.

Die Aufnahmen - unabhängig davon, ob mit lediglich einem Koppelabschnitt oder mehreren Koppelabschnitten versehen - sind mit dem Fachmann geläufigen Mitteln im Fahrzeug gelagert, beispielsweise mittels seitlichen (links, rechts, unten und/oder oben verlaufenden) Führungsschienen, Seilzügen und/oder Zahnstangen, die auch von Motoren angetrieben werden können.

Vorzugsweise ist mindestens eine Sensoranordnung vorhanden, die registriert, ob eine Windschotteinrichtung in den Aufnahmen eingesetzt ist oder nicht. Nur im letzteren Fall ist bevorzugt - auf Anforderung durch einen Bediener - das Verdeck automatisch schließbar. Der Sensor kann entsprechend dem Fachmann geläufiger Technologie ausgebildet sein, beispielsweise als berührungsloser Sensor, z.B. als Hall-Sensor, RFID-Sensor oder IR-Sensor. Alternativ ist ein Berührungssensor möglich, der beispielsweise als Kontaktschalter ausgebildet ist. Statt einer Überprüfung, ob eine Windschotteinrichtung eingebaut ist, kann pro Aufnahme eine Sensoranordnung vorgesehen sein, welche registriert, ob sich die Aufnahmen in Ruheposition befinden. Nur in dieser ist es dann bevorzugt möglich, das Verdeck zu schließen.

Vorteilhafterweise sind Einführhilfen für die Stifte bzw. Zapfen vorhanden, die verschiedenartig ausgebildet sein können. Beispielsweise sind diese an der Windschotteinrichtung, an den Koppelelementen selbst (z.B. unterseitige Abrundungen zum bessern Gleiten in die Öffnungen), an den Koppelabschnitten (Senken um die Öffnungen herum) oder als optische Markierungen ausgebildet (z.B. als in Übereinstimmung zu bringende lineare Markierungen am Fahrzeug und an der Windschotteinrichtung).

Gleichfalls umfasst die Erfindung eine vorerwähnte Windschotteinrichtung mit einem Windschott umfassend einen Windschottrahmen und mindestens eine innerhalb des Schottrahmens angeordnete Flachmaterialbahn, und mit einer Abdeckung umfassend einen Abdeckungsrahmen und mindestens eine innerhalb des Abdeckungsrahmens angeordnete Flachmaterialbahn. Der Windschottrahmen und der Abdeckungsrahmen sind schwenkbar miteinander verbunden. Erfindungsgemäß weist die Windschotteinrichtung Koppelelemente zum Einführen in die zuvor beschriebenen bewegbaren Aufnahmen auf. Die Koppelelemente sind bevorzugt am Abdeckungsrahmen vorgesehen.

Die Koppelelemente umfassen bevorzugt Stifte bzw. Zapfen, die in Gebrauchsposition der Windschotteinrichtung im Wesentlichen senkrecht nach unten ragen (z-Richtung). Bei einer vorteilhaften Alternative stehen die Stifte bzw. Zapfen in Gebrauchsstellung der Windschotteinrichtung im Wesentlichen seitlich ab (y-Richtung).

Endseitig können die Stifte eine Verbreiterung, beispielsweise einen verbreiterten Teller, aufweisen.

Die Stifte bzw. Zapfen können federbelastet ausgebildet sein. Es ist z.B. möglich, dass die Verbreiterung in radialer Richtung federbelastet ist und sich somit radial zusammendrücken lässt. Die Verbreiterung kann somit durch eine schmale Öffnung geführt werden, wie beispielsweise durch einen Koppelabschnitt einer erfindungsgemäßen Aufnahme. Nach Passieren der Öffnung nimmt die Verbreiterung dann aufgrund der Federkraft ihren ausgefahrenen Zustand ein.

Auch die Aufnahmen können federbelastet sein und/oder Federn aufweisen, die auf Teile der Windschotteinrichtung wirken, insbesondere auf Teile der Koppelelemente, um die Windschotteinrichtung klapper- und spielfrei in der Gebrauchsstellung zu halten.

Die Stifte bzw. Zapfen sind vorzugsweise in einer Vertiefung oder in einer Stufe des Abdeckungsrahmens angeordnet.

Gemäß einer Ausführungsform des Windschotts ist der Abdeckungsrahmen in mindestens zwei Teilrahmen unterteilt, die über mindestens ein Drehgelenk schwenkbar miteinander verbunden sind. Der Schottrahmen kann hierbei mindestens ein Doppelgelenk aufweisen, wobei die Windschotteinrichtung aus einer gefalteten Aufbewahrposition in eine Gebrauchsposition faltbar ist, indem zunächst der Windschottrahmen an den Abdeckungsrahmen geschwenkt wird, um anschließend den Windschottrahmen um den Abdeckungsrahmen zu falten. Gemäß einer alternativen Ausführungsform ist der Windschottrahmen mit dem Abdeckungsrahmen über ein einfaches Gelenk verbunden, wobei der Windschottrahmen oder der Abdeckungsrahmen in zumindest teilweise voneinander lösbare Teilrahmen unterteilt ist.

Alternative Ausgestaltungen von mit den erfindungsgemäßen Aufnahmen koppelbaren Windschotteinrichtungen sind ohne weiteres möglich, insbesondere Windschotteinrichtungen lediglich mit Einfachgelenken und/oder solchen mit einem starren, d.h. nicht in sich verschwenkbaren Windschottrahmen und/oder Abdeckungsrahmen.

Beliebige Kombinationen der oben aufgeführten Merkmale sind realisierbar, solange sie sich technisch ausführen lassen.

Weitere Vorteile der Erfindung werden anhand der nachfolgend dargestellten Ausführungsbeispiele beschrieben. Es zeigen:
- **Figur 1**: eine Windschotteinrichtung in montierter Gebrauchsposition in einem Personenkraftfahrzeug in perspektivischer Darstellung;
- **Figuren 2**: den Fond eines Fahrzeugs in perspektivischer Sicht mit zu montierender Windschotteinrichtung sowie zwei alternativen Detaildarstellungen A und B;
- **Figur 3a - 3c**: Einbausituation einer Windschotteinrichtung gemäß einer möglichen Ausführungsform von Aufnahmen in zwei Vorderansichten und einer Draufsicht;
- **Figur 4**: eine weitere mögliche Einbausituation in schematischer Vorderansicht;
- **Figur 5a - 5c**: Details des Einbaus der Windschotteinrichtung gemäß der Figur 4 in zwei Schritten (Draufsicht) sowie eine Arretiervorrichtung für die Stifte (geschnittene Seitensicht);
- **Figur 6**: Vorderansicht einer schematisch dargestellten Abfolge des möglichen Einbaus einer Windschotteinrichtung;
- **Figuren 7a - 7c**: schematisch dargestellter Einbau einer Windschotteinrichtung in eine federbelastete Aufnahme in drei Schritten, jeweils in Vorderansicht;
- **Figur 8a, 8b**: Details des Einbaus einer Windschotteinrichtung in eine weitere Ausführungsform einer Aufnahme in zwei Schritten, jeweils in Draufsicht;
- **Figuren 9a - 9c**: eine Ausführungsform einer drehbaren Aufnahme in Ruhestellung sowie zweistufiger Einbau einer Windschotteinrichtung, jeweils in Draufsicht;
- **Figur 10**: eine Variante ähnlich der Ausführungsform gemäß der Figuren 9a - 9c, jedoch mit x-Verschiebung der Windschotteinrichtung, in Draufsicht;
- **Figuren 11a - 11c**: eine weitere Ausführungsform einer drehbaren Aufnahme in Ruhestellung sowie zweistufiger Einbau einer Windschotteinrichtung, jeweils in Vorderansicht, und
- **Figur 12a, 12b**: den Einbau einer Windschotteinrichtung gemäß einer weiteren Ausführungsform in zwei Schritten, jeweils in Vorderansicht.

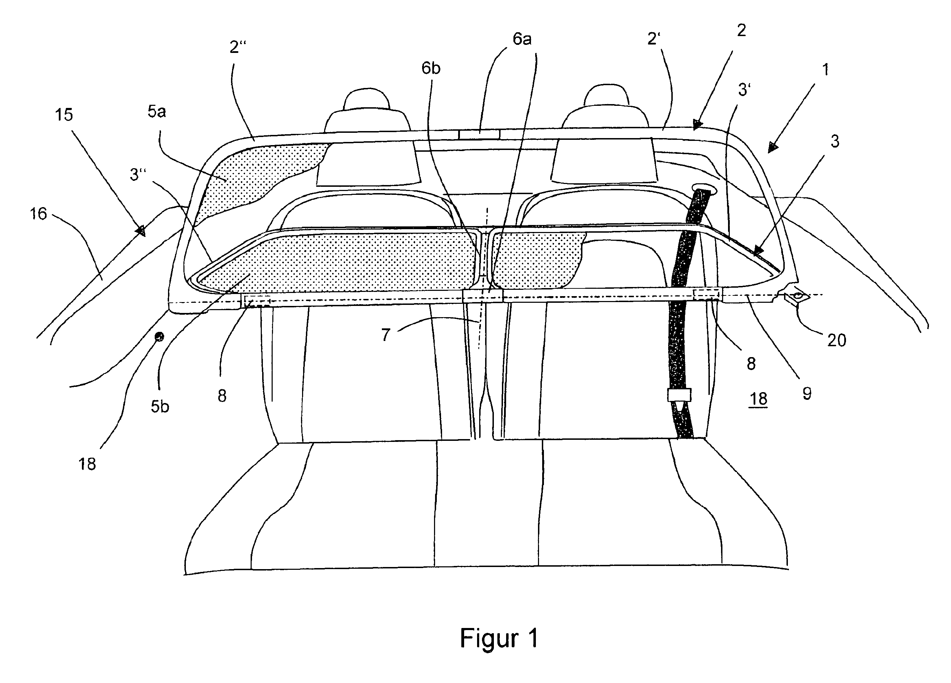

Figur 1 zeigt eine Windschotteinrichtung 1 für ein Personenkraftfahrzeug 15 in montierter Gebrauchsposition. Die Windschotteinrichtung 1 weist einen Windschottrahmen 2 sowie einen Abdeckungsrahmen 3 auf. In der hier gezeigten Gebrauchsposition erstreckt sich der Windschottrahmen 2 der Windschotteinrichtung 1 senkrecht hinter den hier nicht dargestellten Kopfstützen der Vordersitze, während der Abdeckungsrahmen 3 sich parallel zu einer Gürtellinie 16 des Fahrzeuges 15 erstreckt. In dem Windschottrahmen 2 sowie in dem Abdeckungsrahmen 3 ist jeweils eine Flachmaterialbahn 5a bzw. 5b aufgespannt, welche jeweils nur teilweise dargestellt ist. Die Flachmaterialbahn 5a dient als Windstopper für die Personen auf den Vordersitzen, die Flachmaterialbahn 5b ist eine Abdeckung für den Raum über den Rücksitzen des Fahrzeuges 15 und hilft, Verwirbelungen zu vermeiden. Beide Flachmaterialbahnen 5a, 5b dienen auch zur Reduzierung der Geräuschbelästigung.

Der Windschottrahmen 2 und der Abdeckungsrahmen 3 sind über zwei hier nur schematisch angedeutete Drehgelenke 8 schwenkbar miteinander verbunden. Der Windschottrahmen 2 ist auch in im Fahrzeug 4 montierten Zustand um die Schwenkachse 9, welche sich quer zur Fahrtrichtung erstreckt, gegen den Abdeckungsrahmen 3 klappbar.

Der Abdeckungsrahmen 3 besteht vorliegend aus zwei Teilrahmen 3' und 3", welche durch wenigstens ein weiteres Drehgelenk 6b mit Klappachse 7 miteinander verbunden sind. Der Windschottrahmen 2 besteht ebenfalls aus zwei Teilrahmen 2' und 2", welche durch zwei Doppelgelenke 6a miteinander klappbar verbunden sind. Hierdurch kann die Windschotteinrichtung 1, nachdem der Windschottrahmen 2 um die Schwenkachse 9 auf den Abdeckungsrahmen 3 geklappt wurde, bei herausgenommener Windschotteinrichtung 1 durch ein weiteres Zusammenfalten um die Klappachse 7 des Abdeckungsrahmens 3 bzw. die beiden beabstandet voneinander liegenden Klappachsen des Doppelgelenks 6a des Windschottrahmens 2 zusammengeklappt werden. In der zweifach gefalteten Aufbewahrposition nimmt die Windschotteinrichtung 1 nur noch die Hälfte seiner Breite im Vergleich zu seiner Gebrauchsposition und damit ein minimales Packmaß ein.

Der Abdeckungsrahmen 3 der Windschotteinrichtung 1 ist am Fahrzeug 15 mit Hilfe von Koppelelementen befestigbar. Das Fahrzeug 15 weist hierzu im Bereich der beidseitigen Seitenverkleidungen 18 Aufnahmen auf, welche mit den Koppelelementen der Windschotteinrichtung 1 gekoppelt werden. Eine derartige Aufnahme 20 ist in der Figur 1 am rechten Bildrand angedeutet, wobei eine Ecke des Windschottrahmens 2 weggebrochen dargestellt ist.

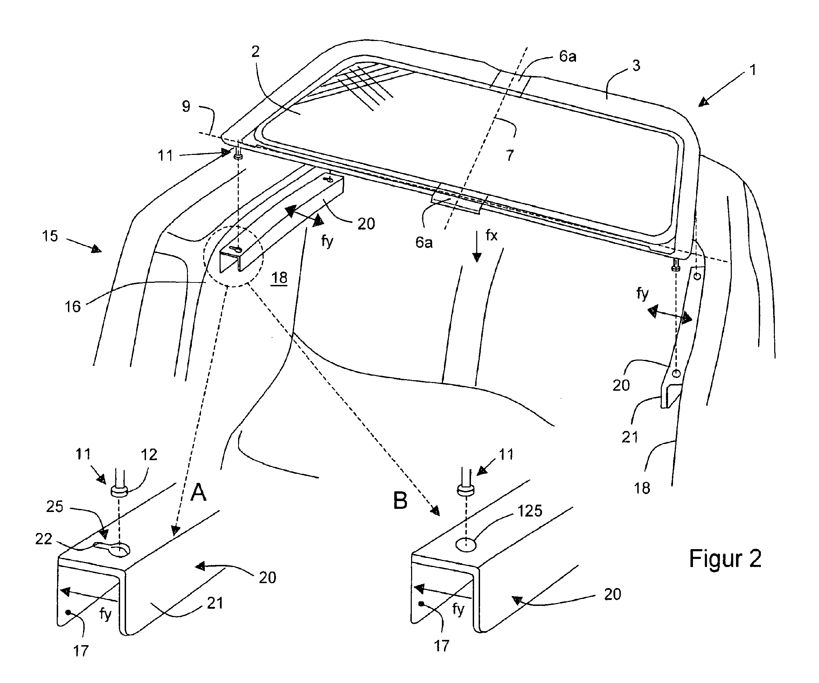

In den Figuren 2 - 12 sind erfindungsgemäße Ausgestaltungen verschiedener Aufnahmen 20, 420, 520, 620 sowie entsprechende Koppelelemente an einem Abdeckungsrahmen 3 detaillierter dargestellt.

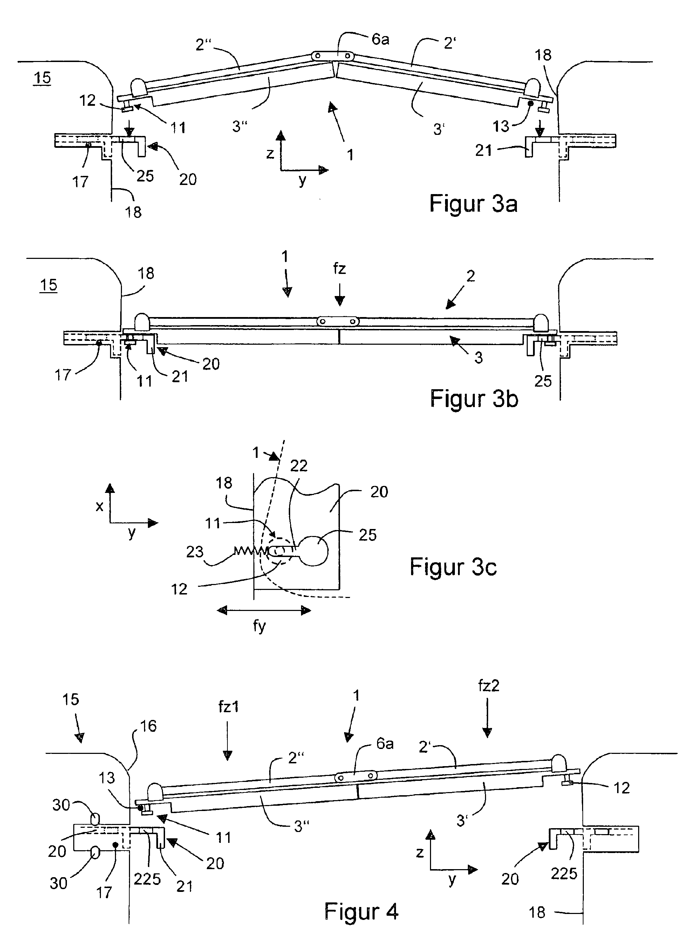

Gemäß der Ausführungsform der Figur 2 ist der Windschottrahmen 2 um die Schwenkachse 9 auf den Abdeckungsrahmen 3 geklappt. In dieser Position soll die Windschotteinrichtung 1 in dem Fahrzeug 15 montiert werden. Fahrzeugseitig sind hierzu an beiden Seiten sich in Längsrichtung (x-Richtung) des Fahrzeugs 15 erstreckende, leistenartige Aufnahmen 20 vorgesehen, die als Aluminiumstrangprofile mit nach unten weisender Abkröpfung 21 ausgebildet sein können. Andere Materialien und Herstellungsarten anstelle von Aluminiumstrangprofilen sind selbstverständlich möglich. Die Aufnahmen 20 lassen sich erfindungsgemäß bewegen. Vorliegend sind die Aufnahmen 20 linear verschieblich nach Art einer Schublade ausgebildet (s. Doppelpfeile fy in den Figuren 2, 3c und 4a; in allen Figuren bezeichnen die Buchstabenzusatze x, y, z die entsprechenden Richtungen). Im ausgefahrenen Zustand ist die Oberseite der Aufnahmen 20 und deren Abkröpfung 21 zu sehen, im eingeschobenen Zustand verdeckt die Abkröpfung 21 eine Ausnehmung 17 in der Seitenverkleidung 18 des Fahrzeugs 15, wie dies in den Figuren 3a und 3b gestrichelt dargestellt ist. Die Abkröpfung 21 kann einen Bezug, einen Beschlag, eine Zierleiste oder ähnliches aufweisen, um einen geschlossenen optischen Gesamteindruck der Fahrzeugverkleidung 18 zu erzielen, wenn die Aufnahme 20 in die Vertiefung 18 eingeschoben ist. Bevorzugt ergibt sich aufgrund der eingeschobenen Aufnahmen 20 kein optischer Bruch. Dies wird vorzugsweise dadurch geleistet, dass die Aufnahmen 20 bzw. deren Beschläge (Bezüge usw.) mit den umgebenden Fahrzeugelementen abschließen.

Auf der Oberseite der Aufnahmen 20 sind gemäß der Figur 2 jeweils zwei in Fahrzeuglängsrichtung (x-Richtung) beabstandete, als Öffnungen ausgebildete Koppelabschnitte 25 (Vergrößerung A) bzw. - gemäß einer Alternative - 125 (Vergrößerung B) vorgesehen. Die Öffnungen 25 umfassen runde Ausnehmungen, die in Richtung zu den Fahrzeugverkleidungen 18 hin jeweils in einen Schlitz 22 übergehen. In den kreisförmigen Teil der Öffnungen 25 lassen sich senkrecht vom Abdeckungsrahmen 3 nach unten abstehende Stifte 11 mit verbreitertem endseitigem Teller 12 einführen. Die Teller 12 können auch eine teilkugelförmige, pyramidenartige o.ä. Unterseite und/oder eine Federbelastung zur radialen Querschnittsverringerung beim Durchführen durch enge Öffnungen 25 aufweisen. Gleichfalls können die Teller in z-Richtung federbelastet sein, beispielsweise durch eine axial im Stift angeordnete Feder. Derartige Federn - auch solche, die von außen auf die Stifte 11 wirken - können ganz allgemein bei allen beschriebenen Ausführungsformen insbesondere dazu dienen, die Windschotteinrichtung klapperfrei und spielfrei in den Aufnahmen zu lagern.

Zum Einführen der Windschotteinrichtung 1 gemäß den Figuren 3a - 3c wird diese in noch nicht ganz aufgeklappter Stellung (Figur 3a) in die beiden Aufnahmen 20 mit den jeweils zwei vorder- und hinterseitigen Öffnungen 25 eingesteckt (s. Pfeile). Anschließend wird die Windschotteinrichtung 1 vollständig in z-Richtung aufgedrückt (s. mittigen Pfeil fz in Figur 3a), wobei die Stifte 11 entlang der Schlitze 22 in y-Richtung geschoben werden. Die endseitigen Teller 12 der Stifte 11 befinden sich hierbei auf der Unterseite der Aufnahmen 20. In dieser Position können die Stifte 11 nicht mehr nach oben aus den Aufnahmen 20 rutschen, und die Windschotteinrichtung 1 verbleibt lagefest in ihrer Gebrauchsstellung (Figur 3b mit vorderseitiger Darstellung und Figur 3c mit Darstellung von oben, wobei eine Teilkontur der Windschotteinrichtung 1 bzw. des Abdeckungsrahmens3, der Stift 11 und der Teller 12 gestrichelt wiedergegeben sind). Es können zusätzlich, vorzugsweise am Abdeckungsrahmen 3 angeordnete, Sicherungseinrichtungen vorgesehen sein, die ein Zusammenklappen des Abdeckungsrahmens 3 ohne manuellen Eingriff seitens eines Bedieners verhindern.

In der Figur 3c ist zusätzlich eine fahrzeugseitig montierte Feder 23 vorhanden, die auf den Teller 12 des Stifts 11 wirkt, um ein Verrutschen und Klappern der Windschotteinrichtung zu verhindern. Solche Federn 23 sind bei dieser Ausführungsform vorzugsweise allen Stiften 11 des Abdeckungsrahmens 3 zugeordnet.

Sind die Öffnungen 125, wie in der Vergrößerung B der Figur 2 gezeigt, nicht geschlitzt ausgeführt, ist eine zusätzliche Arretierung der Koppelelemente zwingend notwendig.

In der Ruheposition sind die Aufnahmen 20 jeweils vollständig in eine Vertiefung in der Fahrzeugverkleidung 18 eingeschoben, wobei die Abkröpfungen 21 vorteilhafterweise mit der Verkleidung 18 abschließen (nicht dargestellt, s. aber gestrichelte Wiedergaben der Aufnahmen 20 in den Figuren 3a, 3b, 4).

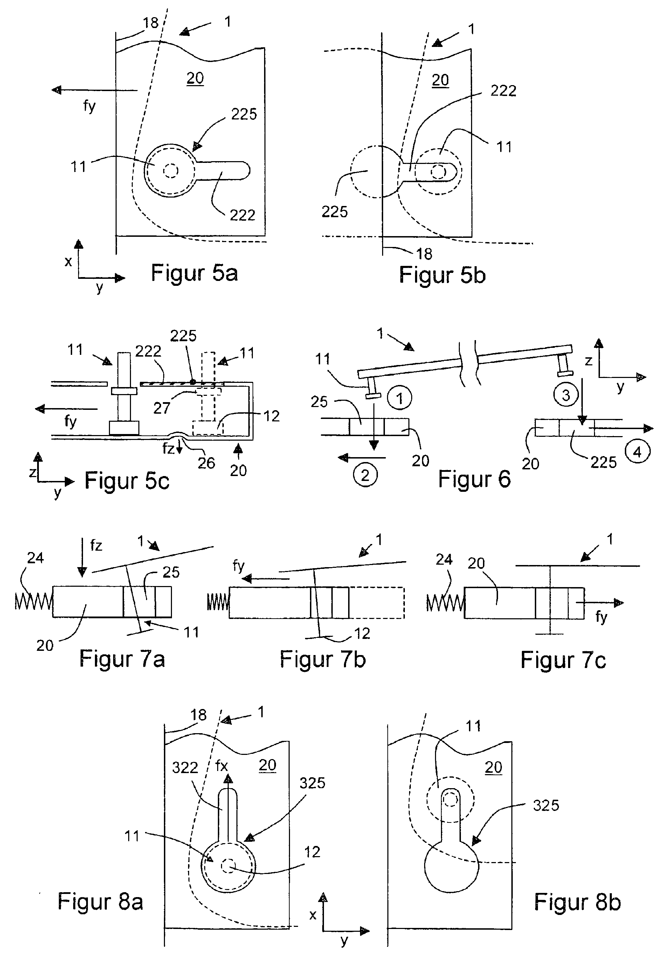

In der Figur 4 (schematisch von vorne gesehen) und den Figuren 5a - 5c (Draufsicht) wird ein vollständig aufgeklappter Abdeckungsrahmen 3 mit auf diesen geklapptem Windschottrahmen 2 in z-Richtung in Koppelabschnitte 225 mit in diesem Fall von der Fahrzeugverkleidung 18 jeweils weggerichtetem Schlitz 222 bei ansonsten gleich ausgebildeten Aufnahmen 20 eingesteckt. Zunächst werden hierbei die in Figur 4 auf der linken Seite dargestellten Stifte 11 der Windschotteinrichtung 1 von oben in die Öffnungen 225 eingeführt (Pfeil fz1), dann die rechten Stifte 11 (Pfeil fz2). Alternativ kann die Windschotteinrichtung auch in horizontaler Lage im Wesentlichen gleichzeitig in die Öffnungen 225 eingeschuht werden.

Im Übrigen weisen die in den Figuren 3 und 4 dargestellten Abdeckungsrahmen 3 an ihren beiden der Fahrzeugverkleidung 18 zugewandten Seiten Vertiefungen 13 auf, in denen jeweils die Stifte 11 angeordnet sind. Diese stehen somit nicht unterseitig über den Abdeckungsrahmen 3 hervor und vermindern damit ein mögliches Verletzungs- bzw. Beschädigungsrisiko. Derartige Vertiefungen 13 sind selbstverständlich auch bei den in den anderen Figuren gezeigten Ausführungsformen möglich.

Des weiteren ist in der Figur 4 beispielhaft eine Sensoranordnung 30 bestehend aus IR-Sender und IR-Empfänger dargestellt, die registriert, ob die Aufnahme 20 in die Vertiefung 17 eingeschoben ist oder nicht. Bei vollständig eingeschobener Aufnahme 20 wird der Infrarot-Signalweg unterbrochen und eine entsprechende Nachricht weitergeleitet, die es erlaubt, dass das Cabriolet-Verdeck ausgefahren werden kann. Ansonsten könnte es aufgrund von Unachtsamkeit passieren, dass bei montierter Windschotteinrichtung 1 das Verdeck ausgefahren wird und mit der Windschotteinrichtung kollidiert. Die Sensoranordnung 3 liefert also ein Freigabesignal, so dass ein gefahrloses Schließen des Verdecks möglich ist.

Anstatt zu überprüfen, dass die Aufnahmen 20 sich alle in Ruheposition befinden, kann mittels einer Sensoranordnung alternativ überprüft werden, ob eine Windschotteinrichtung 1 in die Aufnahmen eingesetzt ist oder nicht. Unabhängig hiervon können verschiedene Sensoranordnungen Anwendung finden, insbesondere verschiedene berührungslose oder mit Berührung arbeitende Sensoren.

Gemäß der Figur 5a ist die Windschotteinrichtung 1 (in den Figuren 5a und 5b gestrichelt dargestellt) von oben in die vollständig ausgefahrene Aufnahme 20 eingelegt dargestellt. Anschließend werden alle Aufnahmen 20 in y-Richtung gemäß Pfeil fy teilweise in die Fahrzeugverkleidung 18 eingeschoben. Die Windschotteinrichtung 1 selbst wird nicht bewegt. Vielmehr rutscht der Schlitz 222 der Öffnung 225 entlang des Stifts 11, der aufgrund des unterseitigen Tellers 12 lagefest in der Aufnahme 20 fixiert wird (Figur 5b). Somit befindet sind die Aufnahme 20 in der in Figur 5b dargestellten Stellung in einer Gebrauchsstellung bzw. -position.

Es bietet sich an, die Aufnahmen 20 selbst in der Vertiefung 17 geeignet zu fixieren, so dass sie sich nicht ungewollt in die in Figur 5a dargestellte Position zurück bewegen. Der Fachmann kennt entsprechende Lösungen (Stiftverriegelung, Verrastung, elektromagnetischer Schalter, motorbetriebene und damit positionsfixierbare Zahnstange o.ä.). Eine solche Verriegelung ist vorzugsweise auch bei anderer Ausgestaltung der Aufnahmen vorhanden.

In der Figur 5c ist eine Alternative für die Lagerung eines Stifts 11 in einer Aufnahme 20 gezeigt. Hier ist die Aufnahme 20 nach unten geschlossen. Die oberseitige Öffnung 225 weist hier wiederum einen in y-Richtung von der Fahrzeugverkleidung weg gerichteten Schlitz 22 auf (hier als gestrichelte Fläche dargestellt). Der Stift 11 mit dem unterseitigen Teller 12 ist wiederum durch die Öffnung 225 einführbar, bis er an die Unterseite der Aufnahme 20 läuft. Dann kann die Aufnahme 20 in Richtung auf die Fahrzeugverkleidung geschoben werden, s. Pfeil fy. Das Besondere an der Ausführungsform gemäß der Figur 5c ist, dass an der Unterseite der Aufnahme 20 eine federartig nachgebende Erhebung 26 als Arretiervorrichtung vorgesehen ist, die bei kraftvoller Belastung durch Hinüberführen des Stifts 11 nachgibt (s. Pfeil fz), beim Passieren sich wieder in die ursprüngliche Position zurück bewegt und dann ein selbsttätiges Zurückbewegen des gestrichelt dargestellten Stiftes 11 verhindert. Um zu verhindern, dass der Stift 11 nicht zurück über die Erhebung 26 rutscht, weist der Stift 11 einen Kragen 27 auf.

In der Figur 6 ist schematisch eine Kombination der Einbausituationen gemäß der Figuren 3a - 3c einerseits und gemäß der Figuren 4, 5a - 5c andererseits dargestellt. In einem ersten Schritt (Ziffer 1 im Kreis) wird die in der Figur 6 auf der linken Seite dargestellte Seite der Windschotteinrichtung 1 in die Öffnung 25 einer Aufnahme 20 eingeführt und anschließend in einem zweiten Schritt die Windschotteinrichtung 1 in Richtung der Fahrzeugverkleidung 18 entlang dem zur Verkleidung 18 weisenden Schlitz 22 der Öffnung 25 geschoben (s. Öffnung 25 der Figur 3c). In einem dritten Schritt führt der Bediener die rechten Stifte 11 von oben in die Öffnungen 225 ein, um anschließend in einem vierten Schritt - manuell oder automatisch oder vom Bediener durch Befehl ausgelöst - die rechte Aufnahme 20 teilweise in die rechte Fahrzeugverkleidung 18 einzuschieben. Hierzu weist die Öffnung 225 einen von der Verkleidung 18 fort weisenden Schlitz 222 auf (s. Öffnung 225 der Figuren 5a, 5b).

In den Figuren 7a - 7b ist sehr schematisch eine weitere Variante gezeigt, die ebenfalls mit anderen Varianten kombiniert werden kann. Hier ist die Aufnahme 20 mit einer in Richtung des Fahrgastraums wirkenden Feder 24 belastet. Beim Einführen des Stifts 11 drückt der Bediener entgegen der Federkraft die Aufnahme in Richtung der Seitenverkleidung 18 und kann in dieser Position die Stifte 11 auf der anderen Seite der Windschotteinrichtung 1 in die entsprechenden Aufnahmen einführen. Beim Loslassen drückt die Feder 24 die Windschotteinrichtung 1 von der benachbarten Verkleidung 18 weg. Derartige Ausführungen sind mit den verschiedensten Aufnahmen kombinierbar, beispielsweise den verschiedenen Öffnungen mit Schlitz.

Gemäß den Figuren 8a und 8b sind Öffnungen 325 mit in x-Richtung (Fahrzeuglängsrichtung) ausgeführtem Schlitz 322 vorgesehen. Bei dieser Ausführungsform bleiben die Aufnahmen 20 nach Einführen aller Stifte 11 in den jeweiligen Koppelabschnitten bzw. Öffnungen 325 in ihrer jeweiligen Position. Stattdessen wird nun die gesamte Windschotteinrichtung in Richtung des Fahrzeugfond geschoben, wobei die Stifte 11 wieder in den Schlitzen 322 und die Teller 12 unter diesen laufen und ein Lösen der Windschotteinrichtung 1 verhindern.

Die Verschiebung der Windschotteinrichtung 1 in x-Richtung kann manuell oder mittels mindestens eines Motors erfolgen. In letzterem Fall kann beispielsweise eine im Bereich der Vertiefungen 17 angeordnete und in x-Richtung bewegbare Zahnstange eingesetzt werden, die ein Mitnahmeelement, beispielsweise als Haken ausgeführt, für den Teller 12 aufweist.

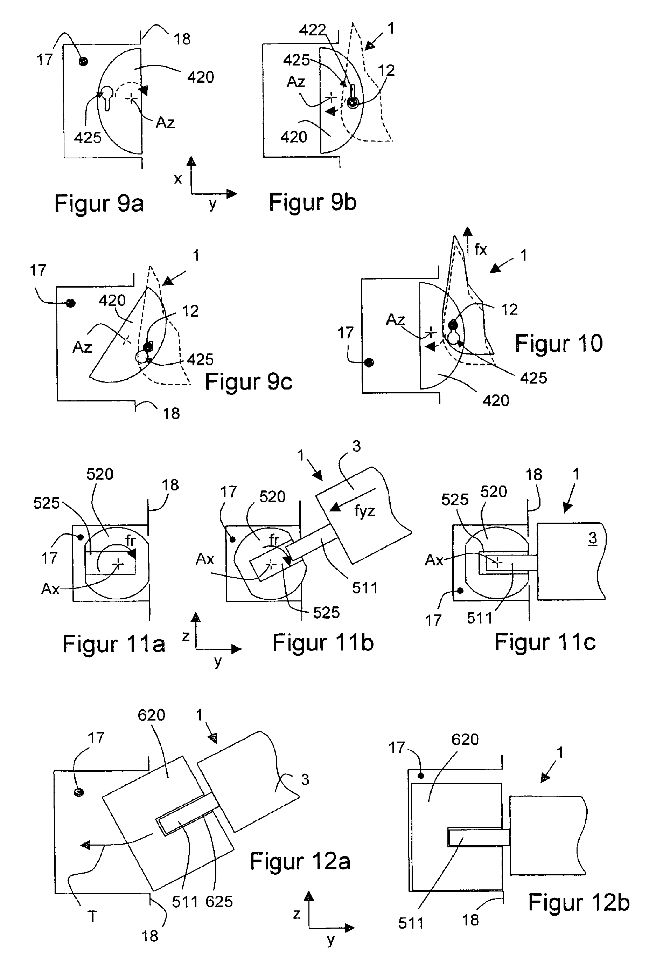

In den Figuren 9a - 9c ist eine Ausführungsform einer Aufnahme 420 dargestellt, die durch Drehung in ihre verschiedenen Positionen bringbar ist. Hier sind Aufnahmen 420 drehbar um die z-Achse Az (Fahrzeughochachse) vorgesehen, wobei die Aufnahmen 420 von der Ruhestellung mit geradem Abschluss der Fahrzeugverkleidung 18 (Figur 9a) in eine Vorbereitungsstellung um 180° drehbar sind (Figur 9b). In dieser ist von oben ein in z-Richtung abwärts ragender Stift 11 mit seinem Teller 12 (nur dieser ist hier der Übersichtlichkeit halber dargestellt und zwar als schwarzer Kreis) einsetzbar. Durch Drehung der Aufnahme 420 um fast 45° (Figur 9c) wird der Stift 11 mit seinem endseitig verbreiterten Teller 12 entlang des Schlitzes 422 geführt und somit der Abdeckungsrahmen 3 bzw. die gesamte Windschotteinrichtung 1 (weggebrochen gestrichelt dargestellt) gegen ein Herausfallen gesichert.

Anstelle einer Rotation der Aufnahme 420 gemäß Figur 9c kann die Windschotteinrichtung 1 bei in Vorbereitungsstellung befindlicher Aufnahme 420 (Figur 9b) gemäß Figur 10 durch lineare Bewegung in x-Richtung in eine fixierte Stellung überführt werden, ähnlich der Ausführungsform gemäß den Figuren 8a, 8b.

In den Figuren 11a - 11c ist ebenfalls eine Aufnahme 520 von der Seite dargestellt, die nicht linear, sondern rotatorisch durch Drehung um eine Achse Ax in ihre verschiedenen Positionen gebracht werden kann. Die Aufnahme 520, die in der Figur 11a in Ruhestellung dargestellt ist, ist hierzu zu beiden Seiten in einer Ausnehmung 17 der Fahrzeugverkleidung 18 schwenkbar um eine in Fahrzeuglängsrichtung (x-Richtung) verlaufende Achse Ax gelagert. Im Wesentlichen ist die Aufnahme 520 als Kugel mit zwei sich gegenüberliegenden Abflachungen ausgebildet. Im Grunde reicht eine einzige Abflachung, um einen möglichst stufenlosen Übergang von Fahrzeugverkleidung 18 und Aufnahme 520 zu erreichen, wie dies in Figur 11a dargestellt ist. Die Aufnahme 520 weist einen als zylindrische radiale Vertiefung 525 ausgebildeten Koppelabschnitt 525 auf, der in Ruhestellung der Aufnahmen 520 in die Ausnehmung 17 weist.

Durch Drehen der Aufnahme 520 gelangt diese in die in Figur 11b dargestellte Position, in der die Vertiefung 525 schräg nach oben zum Fahrzeuginnenraum weist. In dieser Stellung lässt sich ein in diesem Fall seitlich vom Abdeckungsrahmen 3 abstehender Stift 511 (in y-Richtung bei horizontaler Windschotteinrichtung) von schräg oben in die Vertiefung 525 einführen, wobei der Abdeckungsrahmen 3 nicht vollständig aufgeklappt ist (vgl. Figur 3a). Durch mittiges Niederdrücken des Abdeckungsrahmens 3 bzw. der gesamten Windschotteinrichtung 1 (vgl. Figur 3b) rutscht der Stift 511 tiefer in die Vertiefung 525, wobei sich die Aufnahme 520 weiter um die Achse Ax dreht, bis die Vertiefung 525 und der Stift 511 horizontal ausgerichtet sind.

Es bietet sich an, die Lagen der Aufnahme 520 zu fixieren, beispielsweise die Lagen in den Figuren 11a und/oder 11 b mit Hilfe von Elektromagneten, die vom Bediener betätigt werden. Die Lage gemäß der Figur 11c nimmt die Aufnahme 520 automatisch durch Niederdrücken der Windschotteinrichtung 1 ein. In dieser Gebrauchsstellung ist es von Vorteil, wenn der Abdeckungsrahmen 3 weiter fixiert ist, um nicht durch ungünstige Krafteinwirkung zusammenzuklappen, wobei er dann beim Fahren aus den Aufnahmen 520 rutschen könnte.

In den Figuren 12a und 12b ist schließlich eine Aufnahme 620 dargestellt, die sowohl mit rotatorischer als auch translatorischer Komponente bewegbar ist. Die Aufnahme 620 ist mit einem als zylindrische Vertiefung 625 ausgebildetem Koppelabschnitt schräg nach oben ausgerichtet, in welcher ein seitlich von einem Abdeckungsrahmen 3 abstehender Stift 511 (vgl. Figuren 11b, 11c) eingeführt werden kann. Durch Niederdrücken des Abdeckungsrahmens 3 fährt die Aufnahme 620 entlang der gebogenen Trajektorie T (Figur 12a) in die Gebrauchsstellung (Figur 12b), in der die Aufnahme 620 samt Stift 511 in der Ausnehmung 17 lagert. Bei dieser Ausführungsform ist keine abdeckende Sichtblende der Ausnehmung 17 vorgesehen. Bei entsprechender Ausgestaltung der Aufnahme 620, z.B. wie bei der Ausführungsform gemäß den Figuren 11a - 11c, ist aber auch dies ebenfalls durchaus möglich.

Es ist vorteilhaft, die Windschotteinrichtung 1 an mindestens vier Positionen im Fahrzeug zu lagern. Entsprechend ist es vorteilhaft, zwei leistenartige Aufnahmen mit jeweils zwei Koppelabschnitten (s. Figuren 1 - 8) oder vier Aufnahmen mit jeweils einem Koppelabschnitt (s. Figuren 9 - 12) vorzusehen. Die Koppelabschnitte gemäß der Figuren 1 - 8 können selbstverständlich auch in einzelnen Aufnahmen angeordnet sein. Anstelle von insgesamt zwei bzw. vier Aufnahmen bzw. Koppelabschnitten können auch mehr oder weniger Aufnahmen bzw. Koppelabschnitte vorhanden sein, solange eine lagesichere Befestigung der Windschotteinrichtung gewährleistet werden kann.

Die Aufnahmen 20, 420, 520, 620 sind mit geeigneten Lagermitteln im Fahrzeug gelagert, beispielsweise an seitlichen Schienen geführt oder in Achslagern gelagert, manuell beweglich oder motorisch angetrieben. Sie können mittels verschiedener Mechanismen in die jeweils gewünschte Positionen gebracht werden. Es können beispielsweise vom Bediener im Armaturenbereich anzusteuernde Elektromotoren Einsatz finden, die auf Tastendruck, Spracheingabe o.ä. in die Ruhestellung und/oder in eine Gebrauchsstellung verfahren. Alternativ können die Aufnahmen per unmittelbarer Handbetätigung wie gewünscht positioniert werden. Bei einer linear verschiebbaren Aufnahme 20 entsprechend den Figuren 1 - 8 kann beispielsweise ein Feder-Rast-Mechanismus vorhanden sein. Durch Druck auf eine Aufnahme 20 in ihrer Ruheposition wird eine Verrastung gelöst und die Aufnahme 20 fährt beispielsweise durch Federkraft aus der Fahrzeugverkleidung 17. Von dort kann sie bei Bedarf wieder in ihre Ruheposition geschoben werden, wo die Aufnahme 20 wiederum einrastet. Weiterhin können vom Bediener angesteuerte Elektromagnete Verwendung finden. Andere geeignete Lösungen sind für den Fachmann ohne weiteres einsetzbar.

Es ist bevorzugt, dass (hier nicht dargestellte) Einrichtungen zur Fixierung des im Fahrzeug montierten Abdeckungsrahmen 3 in seiner Gebrauchsstellung vorgesehen sind, um eine sichere Lagerung des Abdeckungsrahmens 3 in den Aufnahmen 20, 420, 520, 620 zu gewährleisten. Hierzu können am Abdeckungsrahmen 3 Verriegelungseinrichtungen vorgesehen sein, die nicht mit den vorbeschriebenen Aufnahmen 20, 420, 520, 620 gekoppelt sind, sondern lediglich an den Rahmenteilen der Windschotteinrichtung 1 angeordnet sind. Beim teilweisen oder ganzen Aufklappen der Windschotteinrichtung vor Einsetzen in das Fahrzeug können diese Verriegelungseinrichtungen betätigt werden. Alternativ werden sie erst nach Einsetzen in die Aufnahmen in die Verriegelungsstellung überführt.

Die Erfindung ist nicht auf die dargestellten Ausführungsbeispiele beschränkt. Abwandlungen und Kombinationen der verschiedenen beschriebenen Ausführungen und Merkmale im Rahmen der Patentansprüche fallen ebenfalls unter die Erfindung. So ist es beispielsweise möglich, dass erfindungsgemäß bewegbare Aufnahmen zusätzlich auch im Rücksitzbereich vorgesehen sind. Generell ist die Erfindung - wie schon eingangs erwähnt - auch mit nur einer einzigen Aufnahme mit mindestens einem Koppelabschnitt realisierbar.

Im Übrigen sind auch die Aufnahmen selbst Teil der Erfindung, da Fahrzeuge ohne Aufnahmen mit diesen nachgerüstet werden können.

## Patentansprüche

1. Personenkraftfahrzeug mit mindestens zwei Aufnahmen (20; 420; 520; 620) die eine in das Fahrzeug einsetzbare, nicht dauerhaft mit diesem verbundene Windschotteinrichtung aufnehmen wobei die Aufnahmen (20; 420; 520; 620) jeweils mindestens einen Koppelabschnitt (25; 125; 225; 325; 425; 525; 625) zur Befestigung von mindestens jeweils einem Koppelelement (11; 511) der Windschotteinrichtung (1) aufweisen, wobei Aufnahmen (20; 420; 520; 620) zumindest jeweils im Bereich einander gegenüberliegender Seitenwände des Fahrzeugs (15) angeordnet sind, **dadurch gekennzeichnet, dass** mindestens eine der Aufnahmen (20; 420; 520; 620) von einer Ruhestellung in mindestens eine Gebrauchsstellung bewegbar ausgebildet ist.

2. Personenkraftfahrzeug nach Anspruch 1, **dadurch gekennzeichnet, dass** die Koppelabschnitte (25; 125; 225; 325; 425; 525; 625) in der Ruhestellung der betreffenden bewegbaren Aufnahmen (20; 420; 520; 620) von außen nicht sichtbar sind.

3. Personenkraftfahrzeug nach einem der vorhergehenden Ansprüche, **dadurch gekennzeichnet, dass** die betreffenden Koppelabschnitte (25; 125; 225; 325; 425; 525; 625) und/oder die betreffenden Aufnahmen (20; 420; 520; 620) in der Seitenverkleidung (18) des Fahrzeugs (15) versenkbar ausgebildet sind.

4. Personenkraftfahrzeug nach einem der vorhergehenden Ansprüche, **dadurch gekennzeichnet, dass** die betreffenden Aufnahmen (20; 620) translatorisch bewegbar und vorzugsweise im Wesentlichen senkrecht zur Seitenverkleidung (18) des Fahrzeugs (15) linear bewegbar ausgebildet sind.

5. Personenkraftfahrzeug nach einem der vorhergehenden Ansprüche, **dadurch gekennzeichnet, dass** die betreffenden Aufnahmen (420; 520; 620) drehbar ausgebildet sind, wobei die betreffenden Koppelabschnitte (525; 625) vorzugsweise als Ausnehmungen ausgebildet sind, die zum Einführen der Koppelelemente (511) in eine schräg nach oben in den Fahrgastraum weisende Stellung rotierbar sind.

6. Personenkraftfahrzeug nach einem der vorhergehenden Ansprüche, **dadurch gekennzeichnet, dass** die betreffenden Aufnahmen (20; 420; 520; 620) nach Einführen der Windschotteinrichtung (1) in eine Gebrauchsstellung überführbar sind.

7. Personenkraftfahrzeug nach einem der vorhergehenden Ansprüche, **dadurch gekennzeichnet, dass** den betreffenden Aufnahmen (20; 420; 520; 620) mindestens eine Arretiereinrichtung (23; 26) zugeordnet ist, welche ein Koppelelement (11; 511) relativ zu der zugehörigen Aufnahme (20; 420; 520; 620) arretiert und/oder dass die betreffenden Aufnahmen (20; 420; 520; 620) zumindest in ihrer Gebrauchsstellung lagefest verriegelbar sind.

8. Personenkraftfahrzeug nach einem der vorhergehenden Ansprüche, **dadurch gekennzeichnet, dass** die Koppelabschnitte (25; 125; 225; 325; 425; 525; 625) als Öffnungen und die Koppelelemente (11; 311; 511) als Stifte, oder die Koppelabschnitte als Stifte und die Koppelelemente als Öffnungen ausgebildet sind.

9. Personenkraftfahrzeug nach Anspruch 8, **dadurch gekennzeichnet, dass** zumindest eine der als Koppelabschnitte ausgebildeten Öffnungen (25; 225; 325; 425) in Richtung auf die Seitenverkleidung (18) des Fahrzeugs (15), von ihr weggerichtet oder in Fahrzeuglängsrichtung geschlitzt ausgebildet ist.

10. Personenkraftfahrzeug nach einem der vorhergehenden Ansprüche, **dadurch gekennzeichnet, dass** mehrere Koppelabschnitte (25; 125; 225; 325) in Fahrzeuglängsrichtung beabstandet in einer als Aufnahme (20) dienenden Leiste angeordnet sind, wobei die Leiste bewegbar ausgebildet ist.

11. Personenkraftfahrzeug nach einem der vorhergehenden Ansprüche, **gekennzeichnet durch** mindestens eine Sensoranordnung (30) zum Registrieren, ob die betreffenden Aufnahmen (20; 420; 520; 620) in ihrer Ruheposition sind bzw. ob eine Windschotteinrichtung (1) in den Aufnahmen (20; 420; 520; 620) eingesetzt ist.

12. Windschotteinrichtung (1) für ein Personenkraftfahrzeug mit einem Windschott umfassend einen Windschottrahmen (2) und mindestens eine innerhalb des Windschottrahmens (2) angeordnete Flachmaterialbahn (5a), und mit einer Abdeckung umfassend einen Abdeckungsrahmen (3) und mindestens eine innerhalb des Abdeckungsrahmens (3) angeordnete Flachmaterialbahn (5b), wobei der Windschottrahmen (2) und der Abdeckungsrahmen (3) schwenkbar miteinander verbunden sind, **gekennzeichnet durch** Koppelelemente (11; 511) zum Einführen in die entsprechend ausgebildeten Aufnahmen (20; 420; 520; 620) des Fahrzeugs (15), das nach einem der vorhergehenden Ansprüche ausgebildet ist.

13. Windschotteinrichtung nach Anspruch 12, **dadurch gekennzeichnet, dass** die Koppelelemente (11; 511) Stifte (11) umfassen, die in Gebrauchsposition der Windschotteinrichtung (1) im Wesentlichen senkrecht nach unten ragen (z-Richtung) oder im Wesentlichen seitlich abstehen (y-Richtung), wobei in beiden Fällen die Stifte (11) vorzugsweise endseitig eine Verbreiterung, beispielsweise einen verbreiterten Teller (12), aufweisen.

14. Windschotteinrichtung nach Anspruch 12 oder 13, **dadurch gekennzeichnet, dass** die Stifte (11) in einer Vertiefung oder in einer Stufe (13) des Abdeckungsrahmens (3) angeordnet sind.

15. Windschotteinrichtung nach einem der Ansprüche 12 bis 14, **dadurch gekennzeichnet, dass** sie nach Einführen in die Koppelabschnitte (25; 125; 225; 325; 425; 525; 625) in eine Gebrauchsstellung bewegbar, insbesondere schiebbar, ist.

## Claims

1. A passenger vehicle having at least two receptacles (20; 420; 520; 620) receiving a wind blocking device that can be inserted in the vehicle and not permanently connected thereto, the receptacles (20; 420; 520; 620) each comprising at least one coupling segment (25; 125; 225; 325; 425; 525; 625) for attaching at least one coupling element (11; 511) of the wind blocking device (1) each, receptacles (20; 420; 520; 620) being disposed at least in each area of opposite side walls of the vehicle (15), **characterized in that** at least one of the receptacles (20; 420; 520; 620) is implemented displaceable from a rest position into at least one use position.

2. The passenger vehicle according to claim 1, **characterized in that** the coupling segments (25; 125; 225; 325; 425; 525; 625) are not visible from the exterior in the rest position of the mentioned displaceable receptacles (20; 420; 520; 620).

3. The passenger vehicle according to one of the previous claims, **characterized in that** the mentioned coupling segments (25; 125; 225; 325; 425; 525; 625) and/or the mentioned receptacles (20; 420; 520; 620) are implemented retractable into the side trim (18) of the vehicle (15).

4. The passenger vehicle according to one of the previous claims, **characterized in that** the mentioned receptacles (20; 620) are implemented displaceable in translation, and linearly displaceable preferably in essence perpendicular to the side trim (18) of the vehicle (15).

5. The passenger vehicle according to one of the previous claims, **characterized in that** the mentioned receptacles (420; 520; 620) are implemented to be rotatable, wherein the mentioned coupling segments (525; 625) are preferably implemented as recesses that can be rotated into a position facing diagonally upward into the passenger compartment for inserting the coupling elements (511).

6. The passenger vehicle according to one of the previous claims, **characterized in that** the mentioned receptacles (20; 420; 520; 620) can be transitioned into a use position after the wind blocking device (1) has been inserted.

7. The passenger vehicle according to one of the previous claims, **characterized in that** at least one locking device (23; 26) is associated with the mentioned receptacles (20; 420; 520; 620) and locks a coupling element (11; 511) relative to the associated receptacle (20; 420; 520; 620) and/or that the mentioned receptacles (20; 420; 520; 620) can be locked in place at least in the use position thereof.

8. The passenger vehicle according to one of the previous claims, **characterized in that** the coupling segments (25; 125; 225; 325; 425; 525; 625) are implemented as openings and the coupling elements (11; 311; 511) as pins, or the coupling segments are implemented as pins and the coupling elements as openings.

9. The passenger vehicle according to claim 8, **characterized in that** at least one of the openings (25; 225; 325; 425) implemented as coupling segments is implemented having slits in the direction toward the side trim (18) of the vehicle (15), away from the same, or in the longitudinal direction of the vehicle.

10. The passenger vehicle according to one of the previous claims, **characterized in that** a plurality of coupling segments (25; 125; 225; 325) are spaced apart in the longitudinal vehicle direction in a strip serving as a receptacle (20), wherein the strip is implemented to be displaceable.

11. The passenger vehicle according to one of the previous claims, **characterized by** at least one sensor arrangement (30) for registering whether the mentioned receptacles (20; 420; 520; 620) are in the rest position thereof or whether a wind blocking device (1) has been inserted in the receptacles (20; 420; 520; 620).

12. A wind blocking device (1) for a passenger vehicle, having a windblocker comprising a windblocker frame (2) and at least one flat material web (5a) disposed within the windblocker frame (2), and having a cover comprising a cover frame (3) and at least one flat material web (5b) disposed within the cover frame (3), the windblocker frame (2) and the cover frame (3) being pivotally connected to each other, **characterized by** coupling elements (11; 511) for inserting into the correspondingly implemented receptacles (20; 420; 520; 620) of the vehicle (15) implemented according to one of the preceding claims.

13. The wind blocking device according to claim 12, **characterized in that** the coupling elements (11; 511) comprise pins (11) protruding substantially vertically downward (in the Z-direction) or protruding substantially sideways (in the Y-direction) in the use position of the wind blocking device (1), wherein in both cases the pins (11) preferably comprise a widening, such as a wider head (12), at the end thereof.

14. The wind blocking device according to claim 12 or 13, **characterized in that** the pins (11) are disposed in a recess or in a step (13) of the cover frame (3).

15. The wind blocking device according to one of the claims 12 through 14, **characterized in that** the wind blocking device can be displaced, particularly slid, into a use position after being inserted into the coupling segments (25; 125; 225; 325; 425; 525; 625).

## Revendications

1. Voiture particulière avec au moins deux logements (20; 420; 520; 620) qui accueillent un dispositif coupe-vent pouvant être installé dans la voiture particulière, qui n'est pas relié durablement avec cette dernière, sachant que les logements (20; 420; 520; 620) présentent respectivement au moins une section de couplage (25; 125; 225; 325; 425; 525; 625) pour la fixation d'au moins un élément de couplage respectivement (11; 511) du dispositif coupe-vent (1), sachant que des logements (20; 420; 520; 620) sont disposés respectivement au moins dans la zone de parois latérales de la voiture particulière (15) opposées l'une à l'autre, **caractérisée en ce que** l'un au moins des logements (20; 420; 520; 620) se présente sous une forme mobile depuis une position de repos à au moins une position d'utilisation.

2. Voiture particulière selon la revendication 1, **caractérisée en ce que** les sections de couplage (25; 125; 225; 325; 425; 525; 625) ne sont pas visibles depuis l'extérieur à la position de repos des logements mobiles correspondants (20; 420; 520; 620).

3. Voiture particulière selon l'une des revendications précédentes, **caractérisée en ce que** les sections de couplage correspondantes (25; 125; 225; 325; 425; 525; 625) et/ou les logements correspondants (20; 420; 520; 620) peuvent être rétracté(e)s dans l'habillage latéral (18) de la voiture particulière (15).

4. Voiture particulière selon l'une des revendications précédentes, **caractérisée en ce que** les logements correspondants (20; 620) peuvent être déplacés en translation linéaire, de préférence dans un sens essentiellement perpendiculaire à l'habillage latéral (18) de la voiture particulière (15).

5. Voiture particulière selon l'une des revendications précédentes, **caractérisée en ce que** les logements correspondants (420; 520; 620) se présentent sous une forme rotative, sachant que les sections de couplage correspondantes (525; 625) se présentent de préférence sous la forme de creux, qui, pour l'introduction des éléments de couplage (511), peuvent être tournés à une position oblique dirigée vers le haut dans l'habitacle (511).

6. Voiture particulière selon l'une des revendications précédentes, **caractérisée en ce que** les logements correspondants (20; 420; 520; 620) peuvent être déplacés à une position d'utilisation après l'insertion du dispositif coupe-vent (1).

7. Voiture particulière selon l'une des revendications précédentes, **caractérisée en ce qu'**un dispositif d'arrêt (23; 26) au moins est attribué aux logements correspondants (20; 420; 520; 620), lequel bloque un élément de couplage (11; 511) relativement au logement correspondant (20; 420; 520; 620) et/ou que les logements correspondants (20; 420; 520; 620) peuvent être verrouillés à une position fixe au moins à la position d'utilisation.

8. Voiture particulière selon l'une des revendications précédentes, **caractérisée en ce que** les sections de couplage (25; 125; 225; 325; 425; 525; 625) se présentent sous forme d'ouvertures et les éléments de couplage (11; 311; 511) sous forme de goupilles, ou les sections de couplage sous forme de goupilles et les éléments de couplage sous forme d'ouvertures.

9. Voiture particulière selon la revendication 8, **caractérisée en ce que** l'une au moins des ouvertures (25; 225; 325; 425) se présentant sous forme de sections de couplage se présente sous une forme fendue vers l'habillage latéral (18) de la voiture particulière (15), la fente s'éloignant de l'habillage latéral ou s'étendant le sens longitudinal de la voiture particulière.

10. Voiture particulière selon l'une des revendications précédentes, **caractérisée en ce que** plusieurs sections de couplage (25; 125; 225; 325) sont disposées dans le sens longitudinal de la voiture particulière à une certaine distance les unes des autres, dans une barrette servant de logement (20), sachant que la barrette se présente sous une forme mobile.

11. Voiture particulière selon l'une des revendications précédentes, **caractérisée par** au moins un dispositif de capteur (30) pour enregistrer si les logements correspondants (20; 420; 520; 620) sont à leur position de repos ou si un dispositif coupe-vent (1) est inséré dans les logements (20; 420; 520; 620).

12. Dispositif coupe-vent (1) pour une voiture particulière, avec un pare-vent comportant un cadre de pare-vent (2) et au moins une bande de matériau plat (5a) disposée au sein du cadre de pare-vent (2), et avec un recouvrement comportant un cadre de recouvrement (3) et au moins une bande de matériau plat (5b) disposée au sein du cadre de recouvrement (3), sachant que le cadre de pare-vent (2) et le cadre de recouvrement (3) sont reliés l'un à l'autre de manière pivotante, **caractérisé par** des éléments de couplage (11; 511) pour l'insertion dans les logements (20; 420; 520; 620) à forme correspondante de la voiture particulière (15), qui se présente sous une forme selon l'une des revendications précédentes.

13. Dispositif coupe-vent selon la revendication 12, **caractérisé en ce que** les éléments de couplage (11; 511) comportent des goupilles (11) qui, à la position d'utilisation du dispositif coupe-vent (1), font saillie vers le bas à une position essentiellement verticale (sens z) ou font saillie de manière essentiellement latérale (sens y), sachant que dans les deux cas, les goupilles (11) présentent un élargissement, de préférence en zone d'extrémité, par exemple un rebord élargi (12).

14. Dispositif coupe-vent selon la revendication 12 ou 13, **caractérisé en ce que** les goupilles (11) sont disposées dans un enfoncement ou un épaulement (13) du cadre de recouvrement (3).

15. Dispositif coupe-vent selon l'une des revendications 12 à 14, **caractérisé en ce qu'**il peut être déplacé, particulièrement poussé, à une position d'utilisation après l'insertion dans les sections de couplage (25; 125; 225; 325; 425; 525; 625).
